# EUROPÄISCHE PATENTSCHRIFT

(11) **EP 0 450 017 B1**
(45) Veröffentlichungstag und Bekanntmachung des Hinweises auf die Patenterteilung: **22.03.1995**
(21) Anmeldenummer: 90915290.2
(22) Anmeldetag: 23.10.1990
(51) Int. Cl.: F16D 41/06

(54) **VERFAHREN ZUR HERSTELLUNG EINES WÄLZLAGERKÄFIGS MIT ANGEFORMTEN FEDERELEMENTEN UND DANACH HERGESTELLTER WÄLZLAGERKÄFIG**
PROCESS FOR PRODUCING A ROLLING BEARING CAGE WITH CAST-ON SPRING ELEMENTS, AND ROLLING BEARING CAGE SO PRODUCED
PROCEDE POUR FABRIQUER UNE CAGE DE ROULEMENT AVEC DES ELEMENTS ELASTIQUES CONFORMES, ET CAGE DE ROULEMENT AINSI OBTENUE

(30) Priorität: 24.10.1989 DE 3935295
(43) Veröffentlichungstag der Anmeldung: 09.10.1991
(73) Patentinhaber: RABE, Jürgen, 91315 Höchstadt (DE)
(72) Erfinder: RABE, Jürgen, 91315 Höchstadt (DE)
(74) Vertreter: Hufnagel, Walter, Dipl.-Ing., Dipl.-Wirtsch.-Ing.
(86) Internationale Anmeldenummer: DE9000805
(87) Internationale Veröffentlichungsnummer: WO9106784

(56) Entgegenhaltungen:
- EP-A- 0 176 767
- DE-A- 1 625 744
- FR-A- 1 396 281
- FR-A- 2 643 427
- US-A- 3 537 554
- US-A- 3 863 742
- US-A- 3 937 312

## Beschreibung

Die vorliegende Erfindung bezieht sich auf ein Verfahren zur Herstellung eines zum Führen von Wälzkörpern eines Wälzlagers bestimmten Wälzlagerkäfigs mit angeformten Federelementen und einen danach hergestellten Wälzlagerkäfig gemäß den Oberbegriffen der Ansprüche 1 und 4.

Ein Wälzlagerkäfig der genannten Art ist aus der FR-A- 1 396 281 bekannt. Dieser besteht aus einem gegossenen, wärmehärtenden Kunststoff. Über die Art der Herstellung des Wälzlagerkäfigs sind keine weiteren Angaben gemacht. Am Fußpunkt der Federn und an jedem freien Ende derselben ist jeweils eine Verdickung vorgesehen. Letztere dienen dazu, die Durchbiegung der Federn nach rückwärts zu begrenzen.

In der Praxis werden derartige Wälzlagerkäfige auf Spritzgießmaschinen hergestellt. Der Anguß ist dabei in der Regel im Bereich der Borde vorgesehen, wie beispielsweise aus der DE-B- 1 286 843 bekannt ist. Der aus dieser Druckschrift bekannte Wälzlagerkäfig zum Führen der Klemmrollen einer Klemmrollen-Freilaufkupplung besitzt an jedem Steg auf der einen Seite eine Rampe und auf der anderen Seite ist eine Blattfeder zum Vorspannen der Klemmrollen angeformt. Der Wälzlagerkäfig ist aus einem Stück aus elastischem Kunststoff gespritzt. Auch diese und andere auf dem Markt befindlichen Wälzlagerkäfige werden auf Spritzgießmaschinen hergestellt, bei denen die Angüsse im Bereich der Führungsringe bzw. Borde oder im Übergangsbereich zwischen den Borden und den Stegen vorgesehen sind.

Diese Anbindungsart bzw. Lage der Angüsse führt zu einem Quellfluß des verwendeten polymeren Werkstoffes, der eine gezielte Orientierung der Molekülketten und der etwa eingelagerten Verstärkungsfasern im Bereich der Federelemente nicht ermöglicht.

Mit der vorliegenden Erfindung soll die Aufgabe gelöst werden, ein Verfahren zur Herstellung eines Wälzlagerkäfigs mit angeformten Federelementen anzugeben und einen danach hergestellten Wälzlagerkäfig so auszugestalten, daß die Federkraft der Federelemente gegenüber den bekannten Ausführungen erhöht, insbesondere die Federsteifigkeit des bzw. der angeformten Federelements bzw. Federelemente wesentlich verbessert wird.

Gelöst wird diese Aufgabe durch die in den Ansprüchen 1 und 4 angegebenen Verfahrensschritte bzw. Merkmale.

Durch die gemeinsame Anwendung der Verfahrensschritte gemäß Anspruch 1 ergeben sich gegenüber den vorbekannten Verfahren zur Herstellung derartiger Wälzlagerkäfige oder Wälzlager-Nadelkränze insbesondere folgende Vorteile:

Die Gratbildung an den Trennstellen der Gießform wird erheblich verringert, weil der verwendete polymere Werkstoff aufgrund der Anordnung und Ausbildung der Angußstellen die Orientierung der Moleküle in Fließrichtung fördert, gleichzeitig die Verwendung von polymeren Werkstoffen mit niedriger Viskosität und bevorzugt auch das Vergießen mit geringeren spezifischen Drücken ermöglicht. Darüber hinaus ist bei den zum Einsatz gelangenden polymeren Werkstoffen der Polymerisierungsvorgang vergleichsweise schnell abgeschlossen. Die Kaltflußneigung bzw. der Kriecheffekt dieser polymeren Materialien ist bei Anwendung des erfindungsgemäßen Verfahrens außerordentlich gering, was ebenfalls zu verbesserten Federkennlinien führt.

Es ist zu erwarten, daß bei den nach dem erfindungsgemäßen Verfahren hergestellten Wälzlagerkäfigen die Federkennwerte der angeformten Federelemente wesentlich verbessert sind, insbesondere zumindest mit einer Verdoppelung der Federsteifigkeit als Funktion der Prüftemperatur gegenüber bekannten Federelementen zu rechnen ist.

Weitere vorteilhafte Einzelheiten der Erfindung sind in den Unteransprüchen beansprucht und werden in der nachfolgenden Beschreibung anhand der in der Zeichnung veranschaulichten Ausführungsbeispiele näher beschrieben:

Es zeigen:
- Figur 1: eine Draufsicht auf eine Abwicklung eines Wälzlagerkäfigs, mit zwei Federelementen je Steg,
- Figur 2: eine Ansicht gemäß dem Schnitt A-A der Figur 1, jedoch nicht in der Abwicklung, sondern als Abschnitt eines Wälzlagerkäfigs,
- Figur 3: eine Draufsicht auf eine Abwicklung eines Wälzlagerkäfigs mit einem Federelement je Steg und seitlich versetzter Anformstelle,
- Figur 4: eine Draufsicht auf eine Abwicklung eines Wälzlagerkäfigs mit zwei zu einem gemeinsamen Druckelement vereinigten Federelementen und
- Figur 5: eine Ansicht des Schnittes B-B der Figur 3.

Der einstückige, aus polymeren Werkstoff, nämlich aus elastischem Kunststoff gegossene oder gespritzte Wälzlagerkäfig 1 besteht aus zwei ringförmigen Borden 2, 3, die durch achsparallele Stege 4 miteinander verbunden sind. Zwischen den Stegen 4 sind Kammern 5 gebildet, in die je ein Wälzkörper 6 eingespritzt ist, der bei dem vorliegenden Ausführungsbeispielen als zylindrische Rolle dargestellt ist.

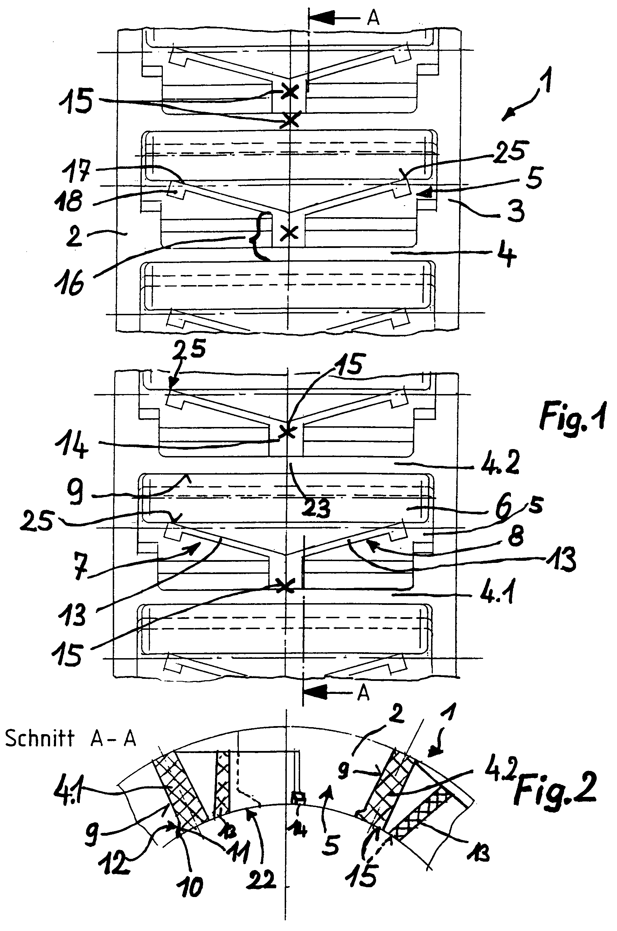

Anstelle zylindrischer oder nadelförmiger Wälzkörper können auch andere langgestreckte Wälzkörper, nämlich in Form von Kegeln, Kegelabschnitten, Tonnen oder dgl. verwendet werden. Die Wälzkörper 6 werden, wie in Figur 1 dargestellt, durch zwei an einem die Kammer 5 begrenzenden Steg 4.1 angeformte Federelemente 7 und 8 gegen die Wand 9 des anderen, die Kammer 5 begrenzenden Steges 4.2 gedrückt.

Die Stege 4 besitzen an der Wand 9 an der innen liegenden, an eine einzusetzende Welle angrenzenden Kante 10 eine Rampe 11 mit vorzugsweise schräg verlaufender Fläche 12.

Der federnde Teil 13 der Federelemente 7, 8 ist bevorzugt nach Art eines Federbandes, also als Blattfeder, ausgebildet.

Erfindungsgemäß sind die Federelemente 7, 8 über einen großvolumigen Federfuß 14 am Steg 4 angeformt. Die in Figur 1 mit der Kennzeichnung "X" angedeuteten Angußstellen 15 können für jeden Steg 4 in einem Bereich 16 zwischen dem Steg 4 und dem Federfuß 14 vorgesehen sein. Es ist also möglich, die Angußstellen 15 entweder unmittelbar am Federfuß 14, im Überlappungsbereich Federfuß 14 und Steg 4 oder nur am Steg 4 anzubringen.

Als polymerer Werkstoff wird ein selbst- bzw. eigenverstärkender Kunststoff mit flüssigkristallinen Anteilen, insbesondere auf der Basis von thermotropen flüssigkristallinen LC-Polymeren, wie Polyazomethine, Polyester, Polyesteramide, Polyestercarbonate, Polyesterimide, Polythiolester oder dgl. verwendet. Diese polymeren Werkstoffe können vorteilhaft mit Faserstoffen, beispielsweise Glasfasern, Kohlefasern, Mineralfasern, Metallfasern, Metalloxidfasern, Textilfasern, Fasern auf Kunststoff oder auf keramischer Basis oder dgl. versetzt sein.

Erfindungsgemäß ist jeder Federfuß 14 so bemessen, daß sein Fließquerschnitt im Verhältnis zum Fließquerschnitt des bzw. der Federelemente(s) 7 bzw. 8 groß ist, beispielsweise volumenmäßig 1,5 bis 3 mal so groß. Durch diese in der vorliegenden Anmeldung als "großvolumig" bezeichnete Ausführung des Federfußes 14 und durch geeignete Wahl der Angußstellen 15 innerhalb des Bereiches 16 zwischen dem Federfuß 14 und dem angrenzenden Steg 4 wird bei Verwendung der genannten speziellen Kunststoffe mit flüssigkristallinen Anteilen erreicht, daß der verwendete Kunststoff zumindest im Bereich der federnden Teile 13 der Federelemente 7, 8 bei der Polymerisation in Fließrichtung orientierte Moleküle bildet. Hierdurch wird eine Verstärkung der Federkraft und eine Verbesserung der Federcharakteristik der Federelemente 7, 8 erreicht. Durch die Verwendung der genannten Kunststoffe ist es außerdem möglich, den Gieß- oder Spritzdruck im Formwerkzeug auf einen Druck zwischen 5 und 900 bar zu reduzieren. Aufgrund dieses reduzierten Gieß- oder Spritzdruckes und der geringen Viskosität der verwendeten Kunststoffe wird auch die Gratbildung vermindert oder sogar weitestgehend beseitigt. Bei bekannten Herstellungsverfahren von Wälzlagerkörpern mit angeformten Federelementen beträgt der Gieß- oder Spritzdruck 1000 bis 1500 bar.

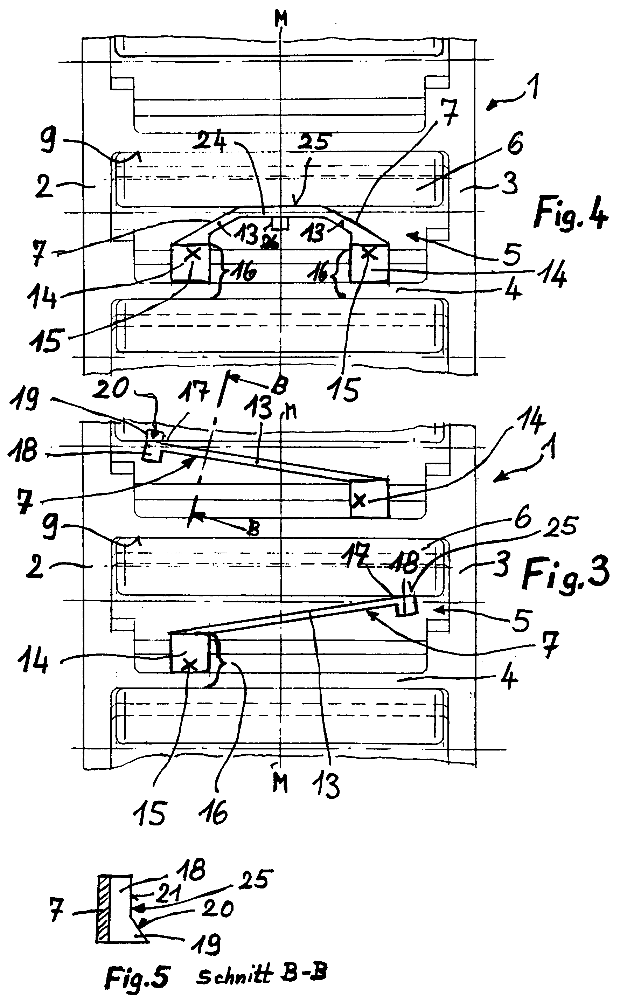

Gemäß einer vorteilhaften Ausgestaltung der Erfindung kann am freien Federende 17 des bzw. der Federelemente(s) 7, 8 ein Masseblock 18 mit einem größeren Fließquerschnitt als dem der federnden Teile 13 angeformt sein. Durch diese Maßnahme wird eine gute Durchströmung des federnden Teils 13 der Federelemente 7, 8 erreicht, wodurch die vorteilhafte gezielte Orientierung der Moleküle bei der Polymerisation des verwendeten Kunststoffes noch begünstigt wird. Am Masseblock 18 kann - vergleichbar wie am Steg 4 - eine zum Wälzkörper 6 hin gerichtete Rampe 19 mit vorzugsweise schräger Fläche 20 vorgesehen, also mit angeformt sein. Diese mit der Rampe 19 versehene Seite 21 des Masseblocks 18 ist zugleich als Auflager 25 für den Wälzkörper 6 ausgebildet (Figur 5).

Die Angußstellen 15 sind vorzugsweise an der Käfiginnenseite 22 vorgesehen (Figur 2).

In den Figuren 1 und 2 ist der den Federfuß der beiden Federelemente 7, 8 bildende Federfußpunkt 14 in oder etwa in der Mitte 23 der Stege 4 vorgesehen. Nach beiden Seiten ist ein zu jedem Bord 2, 3 hin verlaufendes Federelement 7, 8 vorgesehen. Der federnde Teil 13 der Federelemente 7, 8 verläuft nahezu axial zum Käfig 1, nämlich in einem spitzen Winkel, bevorzugt im Bereich zwischen 5° bis 15°. Der dargestellte zylindrische Wälzkörper 6 wird dabei in den Endbereichen durch die Auflager der Federelemente 7, 8 bzw. durch deren dort befindlichen Masseblöcke 18 gegen den zugeordneten Steg 4 bzw. dessen Wand 9 gedrückt. Beide Federelemente 7, 8 erstrecken sich bis annähernd zu den Borden 2, 3.

Bei dem in Figur 3 dargestellten Ausführungsbeispiel ist der Federfuß bzw. Federfußpunkt 14 am Steg 4 seitlich zu dem einen Bord 2 oder zu dem anderen Bord 3 hin versetzt und das zugehörige Federelemente 7 weist jeweils in die Richtung zu dem anderen Bord 3 bzw. 2.

Gemäß dem in Figur 4 gezeigten Ausführungsbeispiel ist in der Nähe eines jeden Bordes 2 bzw. 3 ein Federfuß 14 vorgesehen, von denen aus je ein Federelement 7 in Richtung zur Mitte hin verläuft, diese also gegeneinander gerichtet sind. Die freien Federenden dieser Federelemente 7 können entweder einzeln als Druckelement wirken oder sie können, wie die Figur 4 zeigt, durch einen gemeinsamen Federbügel 24 miteinander verbunden sein. Zusätzlich oder anstelle der zur Mitte weisenden Federelemente 7 können an seitlich versetzt vorgesehenen Federfüßen 14 nach außen weisende Federelemente vorgesehen sein, wie in Figur 1 dargestellt.

Bevorzugt in der Mitte des gemeinsamen Federbügels 24 kann zu den Federfüßen 14 weisend ein weiterer, gestrichelt dargestellter Masseblock 26 vorgesehen sein, mit dem sich eine Zusammenflußebene im Bereich des Federbügels 24 vermeiden läßt. Die Federfüße 14 im Ausführungsbeispiel der Figur 4 können wahlweise auch nur links oder rechts von der Mittelebene M angeordnet sein, vergleichbar der Ausführung in Figur 3.

Die Auflager 25 an den freien Federenden 17 der Federelemente 7, 8, nämlich die Masseblöcke 18 oder der gemeinsame Federbügel 24 sind so ausgebildet, daß die von diesen auf die Wälzkörper 6 übertragene Klemmkraft wenigstens annähernd um 90° zur Molekülorientierung der Kunststoffmoleküle in den Federelementen 7, 8 bzw. in deren federnden Teilen 13 verläuft.

Im Hinblick auf die in den Federelementen 7, 8 gezielte Orientierung der langgestreckten Molekülketten in dem Sinne, daß diese Molekülketten im wesentlichen parallel zueinander verlaufen, also sich wenigstens annähernd in Richtung der Federelemente 7, 8 erstrecken, erhält man vergleichsweise hohe Federkonstanten bzw. Federkräfte, die ein sicheres Andrücken der Wälzkörper 6 an die jeweiligen Stege 4 gewährleisten. Demgemäß ist es für viele Anwendungsfälle ausreichend, die verwendeten selbst- bzw. eigenverstärkenden Kunststoffe unmittelbar einzusetzen, also ohne faserförmige Armierungspartikel auszukommen. Jedoch schließt das erfindungsgemäße Verfahren die Verwendung derartiger Verstärkungsfasern natürlich nicht aus.

Bedeutsam ist, daß die Orientierung der Molekülketten der verwendeten polymeren Werkstoffe und ggf. der Verstärkungsfasern zu der auf die Federelemente 7, 8 einwirkenden Federkraft wenigstens annähernd einen Winkel von 90° bis zu maximal 120° einnimmt. Dies fördert die gegenüber herkömmlich hergestellten Federelementen 7, 8 wesentlich verbesserte Federsteifigkeit bzw. die erhöhten Federkräfte.

## Patentansprüche

1. Verfahren zur Herstellung eines zum Führen von Wälzkörpern (6) eines Wälzlagers bestimmten Wälzlagerkäfigs (1), der aus zwei beiderseits der Wälzkörper (6) angeordneten Borden (2, 3) und mehreren achsparallelen Stegen (4), die die beiden Borde (2, 3) miteinandr verbinden, besteht und im Gießverfahren hergestellt wird, wobei an jedem Steg (4) auf dessen einer Seite eine Rampe (11) zum Halten des jeweiligen Wälzkörpers (6) und auf dessen anderer Seite mindestens ein Federelement (7, 8) zum Vorspannen des jeweils benachbarten Wälzkörpers (6) über einen Federfuß (14), dessen Fließquerschnitt volumenmäßig größer bemessen wird als der Fließquerschnitt des oder der an ihm abzweigenden Federelements bzw. Federelemente (7, 8), angeformt werden und der Wälzlagerkäfig (1) zusammen mit den vorspannenden Federelementen (7, 8) einstückig aus elastischem, polymerem Werkstoff geformt wird, dadurch gekennzeichnet, daß jeder Federfuß (14) direkt oder der angrenzende Steg (4) oder der Bereich (16) zwischen dem Federfuß (14) und dem angrenzenden Steg (4) als Angußstelle (15) verwendet wird, und daß als polymerer Werkstoff ein selbst- bzw. eigenverstärkender Kunststoff mit flüssigkristallinen Anteilen verwendet wird, bei dessen Verwendung Moleküle des das oder die Federelement(e) (7, 8) bildenden Materials in Fließrichtung mit gezielter Orientierung polymerisieren.

2. Verfahren nach Anspruch 1, dadurch gekennzeichnet, daß als selbst- bzw. eigenverstärkende Kunststoffe thermotrope flüssigkristalline Polymere, wie Polyazomethine, Polyester, Polyesteramide, Polyestercarbonate, Polyesterimide, Polythiolester odgl. verwendet werden.

3. Verfahren nach Anspruch 1 oder 2, dadurch gekennzeichnet, daß die Angußstellen (15) mit einem vergleichsweise geringen Gießdruck im Druckbereich von 5 bis 900 bar beaufschlagt werden.

4. Wälzlagerkäfig mit angeformten Federelementen hergestellt nach einem der Ansprüche 1 bis 3, dadurch gekennzeichnet, daß das oder die Federelement (e) (7, 8) an der Angußstelle (15) am Steg (4) einen volumenmäßig größer bemessenen Federfuß (14) aufweist bzw. aufweisen als der Querschnitt des oder der am Federfuß (14) abzweigenden Federelements (7) bzw. Federelemente (7, 8).

5. Wälzlagerkäfig nach Anspruch 4, dadurch gekennzeichnet, daß am oder an den freien Federende(n) (17) ein Masseblock (18) mit größerem Querschnitt als derjenige des federnden Teils (13) des Federelements (7) bzw. der Federelemente (7, 8) vorgesehen ist bzw. sind.

6. Wälzlagerkäfig nach Anspruch 4 oder 5, dadurch gekennzeichnet, daß im Bereich (16) eines jeden Federfußes (14) bis zum Steg (4) eine diesen Bereich teilweise oder vollständig bedeckende Angußstelle (15) vorgesehen ist.

7. Wälzlagerkäfig nach einem der Ansprüche 4 bis 6, dadurch gekennzeichnet, daß eine gemeinsame Angußstelle (15) im überschneidenden Bereich des Federfußes (14) und des angrenzenden Steges (4) vorgesehen ist.

8. Wälzlagerkäfig nach einem der Ansprüche 4 bis 7, dadurch gekennzeichnet, daß die Angußstellen (15) ausschließlich im Bereich des Steges (4) vorgesehen sind.

9. Wälzlagerkäfig nach einem der Ansprüche 6 bis 8, dadurch gekennzeichnet, daß die Angußstellen (15) an der Käfiginnenseite (22) angeordnet sind.

10. Wälzlagerkäfig nach einem der Ansprüche 4 bis 9, dadurch gekennzeichnet, daß am Steg (4) wenigstens ein in Richtung zu dem einen Bord (2 bzw. 3) hin versetzt angeordneter Federfuß (14) vorgesehen ist, und daß das an diesem angeformte Federelement (7) in Richtung zum anderen Bord (3 bzw. 2) weist.

11. Wälzlagerkäfig nach Anspruch 10, dadurch gekennzeichnet, daß in Richtung zu jedem Bord (2, 3) versetzt ein Federfuß (14) vorgesehen ist und von jedem Federfuß (14) aus ein Federelement (7) in Richtung zum anderen Federfuß (14) verläuft, diese also im wesentlichen aufeinander zu gerichtet sind.

12. Wälzlagerkäfig nach Anspruch 11, dadurch gekennzeichnet, daß die elastisch auslenkbaren Federenden (17) der aufeinander zu gerichteten Federelemente (7) durch einen gemeinsamen Federbügel (24) miteinander verbunden sind.

13. Wälzlagerkäfig nach einem der Ansprüche 4 bis 12, dadurch gekennzeichnet, daß der selbst- bzw. eigenverstärkende Kunststoff mit Fasermaterial aus wenigstens einem der Werkstoffe Glas, Kohlenstoff, Metall, Metalloxid, Textil oder Kunststoff versetzt ist.

14. Wälzlagerkäfig nach einem der Ansprüche 4 bis 13, dadurch gekennzeichnet, daß die Richtung der auf das Auflager (25) gerichteten Klemmkraft wenigstens annähernd um 90° zur Molekülorientierung des Kunststoffes der Federelemente (7, 8) verläuft.

## Claims

1. Process for the production of a rolling bearing cage (1) for guiding rolling elements (6) of a rolling bearing, which consists of two flanges (2, 3) disposed on either side of the rolling element (6), and a plurality of coaxial webs (4), which connect the two flanges (2, 3) to one another, and which is produced in a casting process, wherein there is formed on each web (4), on the one side thereof, an incline (11) for retaining the rolling element (6) in each case, and, on the other side thereof, at least one spring element (7, 8) to pretension the rolling elements (6) which are adjacent in each case via a spring foot (14), the flow cross-section of which is larger as regards volume than the flow cross-section of the spring element or elements (7, 8) branching off it, and the rolling bearing cage (1) is formed of an elastic, polymeric material, as an integral part with the pretensioning spring elements (7, 8), characterised in that each web (4) abutting directly or indirectly on the spring foot (14), or the area between the spring foot (14) and the abutting web, is used as a gate location (15), and in that a self-curing or self strengthening plastics material with liquid crystalline parts is used as the polymer material, in the case of the application of which molecules of the material forming the spring element or elements (7, 8) are polymerised in the flow direction with controlled orientation.

2. Process according to Claim 1, characterised in that the self-curing or self-strengthening thermotropic fluid crystalline polymers, such as polyazomethines, polyesters, polyesteramides, polyestercarbonates, polyesterimides, polythioesters or the like are used as plastics materials.

3. Process according to Claim 1 or 2, characterised in that the gate locations (15) are acted on with a comparatively low pouring pressure, in the pressure range of from 5 to 900 bars.

4. Roller bearing cage with integral spring elements produced according to one of Claims 1 to 3, characterised in that the spring element or element(s) (7, 8) have, at the gate location (15) on the web (4), a spring foot (14) which is larger with respect to volume than the cross-section of the spring element (7) or spring elements (7, 8) branching off from the spring foot (14).

5. Rolling bearing cage according to Claim 4, characterised in that a mass block having a cross-section which is larger than that of the resilient part (13) of the spring element (7) or spring elements (7, 8) is or are provided on the free end or ends (17) of the spring.

6. Rolling bearing cage according to Claim 4 or Claim 5, characterised in that in the vicinity (16) of each spring foot (14) up to the web (4) there is provided a gate location (15) completely or partially covering this area.

7. Rolling bearing cage according to any one of Claims 4 to 6, characterised in that a common gate location (15) is provided in the intersecting area of the spring foot (14) and the abutting web (4).

8. Rolling bearing cage according to any one of Claims 4 to 7, characterised in that the gate locations (15) are provided only in the vicinity of the web (4).

9. Rolling. bearing cage according to any one of Claims 6 to 8, characterised in that the gate locations are disposed on the cage interior (22).

10. Rolling bearing cage according to any one of Claims 4 to 9, characterised in that at least one spring foot (14), displaced in the direction towards the one edge (2 or 3), is disposed on the web (4), and in that the spring element (7) formed thereon is directed towards the other edge (3 or 2).

11. Rolling bearing cage according to Claim 10, characterised in that there is provided, displaced in the direction of each edge (2, 3) a spring foot (14), a spring element (7) extends from each spring foot (14) towards the other spring foot (14), these thus being directed substantially towards one another.

12. Rolling bearing cage according to Claim 11, characterised in that the resiliently deflectable spring ends (17) of the spring elements (7) which are directed towards one another are connected to one another by means of a common spring strap (24).

13. Rolling bearing cage according to any one of Claims 4 to 12, characterised in that fibro materials selected from among the materials glass, carbon, metal, metal oxide, textiles or plastics materials, is added to the self-curing or self-strengthening plastics material.

14. Rolling bearing cage according to any one of Claims 4 to 13, characterised in that the direction of the clamping force directed onto the support (25) extends at least virtually at 90° to the molecular orientation of the plastics material of the spring element (7, 8).

## Revendications

1. Procédé de fabrication d'une cage de palier à roulement (1) destinée à guider les organes de roulement (6) d'un palier à roulement, cet cage se composant de deux bords (2, 3) prévus de part et d'autre des organes de roulement (6) ainsi que de plusieurs traverses (4) parallèles à l'axe et reliant les deux bords (2, 3), cette cage étant réalisée par coulée, et chaque traverse (4) comporte d'un côté une rampe (11) pour retenir l'organe de roulement (6) respectif, l'autre côté de la traverse ayant au moins un élément de ressort (7, 8) pour précontraindre l'organe de roulement (6) respectivement voisin par l'intermédiaire d'une base de ressort (14) dont la section de fluage est en volume plus grande que la section de fluage de l'un ou des éléments de ressort (7, 8) qui en dérivent, et la cage de roulement (1) ainsi que les éléments de ressort précontraints (7, 8) sont formés en une seule pièce en un polymère élastique, caractérisé en ce que chaque base de ressort (14) est utilisée directement ou au niveau de la traverse adjacente (4) ou de la zone (16) comprise entre la base de ressort (14) et la traverse adjacente (4) comme point de coulée (15) et en ce que le polymère est une matière plastique autorenforcée ou se renforçant en propre, avec des composants cristallins liquides, et à l'utilisation de laquelle, les molécules de la matière qui forme le ou les éléments de ressort(s) (7, 8) polymérisent avec une orientation déterminée dans la direction de fluage.

2. Procédé selon la revendication 1, caractérisé en ce que l'on utilise comme matière plastique auto-renforcée des polymères à cristaux liquides thermotropes tels que la polyasométhine, des polyesters, des polyesters amides, des polyesters carbonates, des polyesters imides, des polythioles esters ou analogues.

3. Procédé selon la revendication 1 ou 2, caractérisé en ce que les points de coulée (15) sont sollicités par une pression d'injection relativement faible qui se situe dans une plage de niveau d'injection comprise entre 5 et 900 bars.

4. Cage de palier à roulement sur laquelle sont formés des éléments de ressort, obtenue par le procédé selon l'une des revendications 1 à 3, caractérisée en ce que le ou les éléments de ressort(s) (7, 8) comportent au niveau du point de coulée (15) sur la traverse (4), une base de ressort (14) de volume plus grand que la section du ou des éléments de ressort (7) ou (7, 8) qui dérive de la base de ressort (14).

5. Cage de palier à roulement selon la revendication 4, caractérisée en ce que sur l'une ou sur les extrémité(s) de ressort (17), libres, est ou sont prévue(s) un bloc massique (18) de plus grande section que celui de la partie élastique (13) de l'élément de ressort (7) ou des éléments de ressort (7, 8).

6. Cage de palier à roulement selon les revendications 4 ou 5, caractérisée en ce que dans la zone (16) de chaque base de ressort (14), jusqu'à la traverse (4), est prévu un point de coulée (15) qui recouvre cette zone partiellement ou complètement.

7. Cage de palier de roulement selon l'une des revendications 4 à 6, caractérisée par un point de coulée (15) commun dans la zone de chevauchement de la base de ressort (14) et de la traverse adjacente (4).

8. Cage de palier à roulement selon l'une des revendications 4 à 7, caractérisée en ce que les points de coulée (15) sont prévus exclusivement au niveau de la traverse (4).

9. Cage de palier à roulement selon l'une des revendications 6 à 8, caractérisée en ce que les points de coulée (15) sont prévus sur le côté intérieur (22) de la cage.

10. Cage de palier de roulement selon l'une des revendications 4 à 9, caractérisée par une base de ressort (14) prévue de manière décalée sur la traverse (4), au moins en direction d'un bord (2, 3) et en ce que l'élément de ressort (7) formé sur cette base est dirigé vers l'autre bord (3, 2).

11. Cage de palier à roulement selon la revendication 10, caractérisée en ce qu'en direction de chaque bord (2, 3), il est prévu de manière décalée une base de ressort (14) et d'un élément de ressort (7) partant de chaque base de ressort (14) en direction de l'autre base de ressort (14), ces bords sont dirigés essentiellement l'un vers l'autre.

12. Cage de palier à roulement selon la revendication 11, caractérisée en ce que les extrémités de ressort (17) qui se déploient élastiquement pour les éléments de ressort (7) dirigés l'un vers l'autre sont reliées ensemble par un étrier à ressort (24) commun.

13. Cage de palier à roulement selon l'une des revendications 4 à 12, caractérisée en ce que la matière plastique autorenforcée est réticulée avec des fibres d'au moins un matériau choisi dans le groupe formé par le verre, le carbone, un métal, un oxyde métallique, une matière textile ou une matière plastique.

14. Cage de palier à roulement selon l'une des revendications 4 à 13, caractérisée en ce que la direction de la force de serrage dirigée vers le palier (25) est au moins voisine de 90° par rapport à l'orientation moléculaire de la matière plastique constituant les éléments de ressort (7, 8).
